# EUROPÄISCHE PATENTSCHRIFT

(11) **EP 3 495 166 B1**
(45) Veröffentlichungstag und Bekanntmachung des Hinweises auf die Patenterteilung: **09.08.2023**
(21) Anmeldenummer: 18196168.1
(22) Anmeldetag: 24.09.2018
(51) Int. Cl.: B60C 11/00, B60C 11/03, B60C 19/00, B29D 30/06, B29D 30/68, B29D 30/72

(54) **FAHRZEUGLUFTREIFEN AUFWEISEND EINEN OPTOELEKTRONISCH LESBAREN CODE**
VEHICLE TYRE COMPRISING AN OPTO-ELECTRONICALLY READABLE CODE
PNEUMATIQUES DE VÉHICULE COMPORTANT UN CODE LISIBLE DE MANIÈRE OPTOÉLECTRONIQUE

(30) Priorität: 08.12.2017 DE 102017222283
(43) Veröffentlichungstag der Anmeldung: 12.06.2019
(73) Patentinhaber: Continental Reifen Deutschland GmbH, 30165 Hannover (DE)
(72) Erfinder: Behr, Ulrich, 30167 Hannover (DE)
(74) Vertreter: Continental Corporation

(56) Entgegenhaltungen:
- EP-A1- 3 135 424
- EP-A2- 2 921 322
- WO-A1-2005/058588
- WO-A1-2015/058872
- WO-A1-2016/005569
- WO-A1-2016/182076
- WO-A2-2016/005572
- JP-A- S5 993 338

## Beschreibung

Die Erfindung betrifft einen Fahrzeugreifen aufweisend eine äußere Oberfläche, wobei die äußere Oberfläche einen optoelektronisch lesbaren Code aufweist, welcher durch ein Relief aus einer Matrix-Anordnung einer Vielzahl an ersten Oberflächenbereichen aufweisend ein Tiefenprofil und einer Vielzahl an zweiten Oberflächenbereichen aufweisend ein Tiefenprofil gebildet ist, wobei sich die ersten Oberflächenbereiche von den zweiten Oberflächenbereichen in ihrem Tiefenprofil derart unterscheiden, dass sie optoelektronisch unterscheidbar ausgeführt sind, und wobei das Relief eine Relieftiefe von maximal 0,5 mm aufweist und wobei die äußere Oberfläche aufweisend den optoelektronisch lesbaren Code eine Oberfläche eines Laufstreifens des Fahrzeugreifens ist.

Mittels eines optoelektronisch lesbaren Codes kann auf einfache Art und Weise Information bzw. Daten auf einem Produkt in codierter Form dargestellt werden. Beispiele hierfür sind eine durch einen Strichcode dargestellte Produktnummer oder eine mittels eines QR-Codes dargestellte Internetadresse (Uniform Resource Locator), die beispielsweise auf eine Internetseite des Produktherstellers verweist.

Aus der WO 2015/058872 A1 ist ein Fahrzeugreifen mit einem optoelektronisch lesbaren Code auf der Reifenseitenwand bekannt, wobei der optoelektronisch lesbare Code als Relief der Seitenwandoberfläche ausgebildet ist. Das Relief weist eine Vielzahl an ersten Oberflächenbereichen und eine Vielzahl an zweiten Oberflächenbereichen auf, welche sich bei auf die Seitenwand einfallendem Licht in dem von ihnen reflektiertem Licht unterscheiden und hierdurch durch ein optoelektronisches Lesegerät optoelektronisch unterscheidbar ausgeführt sind.

Im Gegensatz zu aufgedruckten oder aufgeklebten farbig oder schwarz-weiss gestalteten optoelektronisch lesbaren Codes ist ein Code dargestellt durch ein solches Relief integraler Bestandteil der Reifenoberfläche und somit in der Regel aus dem gleichen Material wie diese gebildet. Eine zusätzliche Schicht aus einer Folie und/oder Farbe ist nicht nötig. Dies macht das Relief bzw. den Code robust gegenüber Beanspruchung durch Dehnung oder Wärmeeinwirkung und vereinfacht die Produktion.

Ein solches Relief weist allerdings eine gewisse Relieftiefe auf. Da die Seitenwand ein relativ dünnes Bauteil des Fahrzeugreifens ist und auch der Fahrzeugreifen im Bereich der Seitenwand eine geringe Materialstärke aufweist, kann ein solches Relief zu einer Schwächung des Reifens im Bereich der Seitenwand führen.

Ein "Relief" ist ein Oberflächenbereich aufweisend Erhebungen und/oder Vertiefungen relativ zur Grundfläche des Oberflächenbereichs. Die Grundfläche kann dabei parallel zu einer Hüllfläche von an das Relief angrenzenden Oberflächenbereichen verlaufen. Die Erhebungen und/oder Vertiefungen bilden das "Tiefenprofil" des Reliefs.

Eine "Relieftiefe" eines Reliefs ist der maximale Höhenunterschied des Reliefs, gemessen senkrecht zur Grundfläche des Reliefs.

Die WO 2005/058588 A1 offenbart einen Fahrzeugluftreifen aufweisend einen Code auf der Reifenoberfläche, dessen Kontrastwirkung durch auf der Oberfläche aufgebrachte Farbe erzeugt ist. Die EP 3 135 424 A1 offenbart ein Verfahren zum Einbringen von Strukturen in die Oberfläche eines Fahrzeugluftreifens mittels eines gepulst betriebenen Lasers. Die EP 2921 322 A2 offenbart einen Fahrzeugluftreifen umfassend einen Verschleißindikator aufweisend einen QR-Code.

Die WO 2016/005569 A1 offenbart einen Fahrzeugluftreifen aufweisend auf seiner Oberfläche eine Graustufendarstellung aus einer Vielzahl an in einer Matrix-Anordnung angeordneten glatten Oberflächenbereichen sowie Oberflächenbereichen aufweisend jeweils genau ein Element. Die WO 20161005572 A2 offenbart einen Fahrzeugluftreifend aufweisend auf seiner Oberfläche eine Graustufendarstellung, wobei die gesamte Oberfläche der Darstellung Elemente aufweist. Die WO 20161182076 A1 offenbart einen Fahrzeugluftreifen aufweisend eine Oberflächenstruktur aus sich wiederholenden einzelnen asterix-förmigen Erhebungen.

Aufgabe der vorliegenden Erfindung ist es, einen Fahrzeugreifen mit einem optoelektronisch lesbaren Code zur Verfügung zu stellen, wobei der Fahrzeugreifen eine verbesserte Haltbarkeit aufweist.

Die Aufgabe wird gelöst, indem die ersten Oberflächenbereiche in ihrem Tiefenprofil dem Tiefenprofil einer zum Relief verschiedenen Oberfläche des Laufstreifens entsprechen und indem die zweiten Oberflächenbereiche jeweils mehrere Elemente aufweisen.

Der Laufstreifen des Fahrzeugreifens weist somit auf seiner die äußere Oberfläche des Fahrzeugreifens mitbildenden Oberfläche das den optoelektronisch lesbaren Code bildende Relief auf. Es hat sich gezeigt, dass die Haltbarkeit des Laufstreifens um ein Vielfaches robuster gegenüber einer lokalen Verringerung seiner Materialstärke, wie sie durch ein solches Relief einer Relieftiefe von maximal 0,5 mm erzeugt wird, ist als eine Seitenwand eines Fahrzeugluftreifens. Die Haltbarkeit eines Fahrzeugreifens ist durch eine derartige Verringerung der Materialstärke seines Laufstreifens kaum beeinflusst. Die Haltbarkeit eines Fahrzeugluftreifens ist um ein Vielfaches robuster gegenüber einer derartigen Verringerung der Materialstärke seines Laufstreifens als gegenüber einer entsprechenden Verringerung der Materialstärke seines Seitenwand.

Bei einer solchen Relieftiefe ist die Materialstärke des Laufstreifens nur geringfügig verringert bei gleichzeitig für eine gute optoelektronische Lesbarkeit des optoelektronisch lesbaren Codes ausreichender Relieftiefe. Anschließend an das Relief ist der Laufstreifen massiv ausgeführt. Zudem ist bei einem Fahrzeugreifen in der Regel radial innerhalb des Laufstreifens zusätzlich zu einer Karkasse ein Gürtel aufweisend Festigkeitsträger angeordnet, welcher dem Reifen zusätzlich Stabilität gegenüber einer lokalen Verringerung der Materialstärke verleiht.

Somit ist ein Fahrzeugreifen mit einem optoelektronisch lesbaren Code zur Verfügung gestellt, wobei der Fahrzeugreifen eine deutlich verbesserte Haltbarkeit aufweist.

Weiter hat ein auf dem Laufstreifen angeordneter optoelektronisch lesbarer Code den Vorteil, dass der Code auch dann gelesen werden kann, wenn vorrangig der Laufstreifen des Fahrzeugreifens sichtbar ist. Dies ist z.B. bei gestapelten Reifen, wie z.B. in einer Werkstatt oder im Werk, oder bei aufrecht angeordneten Reifen, wie z.B. bei einem Reifenhändler in der Verkaufsausstellung, der Fall.

Die "äußere Oberfläche" des Fahrzeugluftreifens ist dabei die Oberfläche des Fahrzeugluftreifens, die ein Rad bestehend aus einer Felge und dem auf der Felge montierten Fahrzeugluftreifen nach außen mit begrenzt. Hierzu zählen unter anderem die Lauffläche und der Grund und die Flanken von Profilrillen.

Die "Lauffläche" ist eine Oberfläche des Laufstreifens, die die äußere Oberfläche des Fahrzeugreifens mitbildet. Die Lauffläche kommt ganz oder teilweise im Fahrbetrieb mit der Fahrbahn in Berührung. Die Lauffläche zählt somit zu den radial äußersten Oberflächenbereichen des Fahrzeugreifens. Vertiefungen oder Absenkungen der Oberfläche des Reifens z.B. durch Profilrillen tragen nicht zur Lauffläche bei. Die Lauffläche ist insbesondere axial innerhalb der Gürtelkanten angeordnet
Unter einem "Code" kann hierbei die Abbildungen von Daten in Symbolen verstanden werden. Ein "optoelektronisch lesbarer" Code kann durch ein optoelektronisches Lesegerät erfasst und mittels entsprechender Software decodiert und interpretiert werden.

Der erfindungsgemäße optoelektronisch lesbare Code ist durch ein Relief aus einer Matrix-Anordnung einer Vielzahl an ersten Oberflächenbereichen aufweisend ein Tiefenprofil und einer Vielzahl an zweiten Oberflächenbereichen aufweisend ein Tiefenprofil gebildet, d.h. dass die physische Darstellung des Codes durch das Relief gebildet ist. Eine "Vielzahl" entspricht mindestens fünf. Eine "Matrix-Anordnung" ist eine eindimensionale Anordnung in einer Reihe oder eine zweidimensionale Anordnung in Reihen und Spalten.

Die ersten Oberflächenbereiche unterscheiden sich in ihrem Tiefenprofil derart von den zweiten Oberflächenbereichen, dass sie optoelektronisch unterscheidbar ausgebildet sind. Durch die Unterschiede in ihrem Tiefenprofil unterscheidet sich bei Einfall von Licht aus einer Lichtquelle auf das Relief das von einem ersten Oberflächenbereich reflektierte Licht von dem von einem zweiten Oberflächenbereich reflektierte Licht in seiner Intensität. Die Intensität und/oder der Intensitätsunterschied des von den ersten Oberflächenbereichen und den zweiten Oberflächenbereichen reflektierten Lichtes kann von einem optoelektronsichen Lesegerät ortsaufgelöst erfasst und unterschieden werden. Die Oberflächenbereiche sind somit ortsaufgelöst erfassbar und unterscheidbar, wodurch der Code optoelektronisch lesbar ist. Die optoelektronische Lesbarkeit kann in einem Raumwinkel, in mehreren Raumwinkeln oder in allen Raumwinkeln, in die Licht reflektiert wird, gegeben sein.

Das "optoelektronische Lesegerät" umfasst zumindest einen Detektor für Licht. Als optoelektromisches Lesegerät kann ein Lesegerät dienen, welches, wie beispielsweise ein Strichcodescanner, aktiv Licht aussendet und das in den Detektor zurückreflektierte Licht detektiert. Es kann sich auch um ein optoelektronisches Lesegerät handeln, das, wie beispielsweise ein mit einer Fotooptik und einer geeigneten Software ausgestattetes Smartphone, Licht detektiert, das aus der Umgebung von der Oberfläche des Reliefs in den Detektor reflektiert wird. Eine externe oder eine in das optoelektronische Lesegerät integrierte Interpretationssoftware decodiert und interpretiert die mittels des als Relief dargestellten optoelektronisch lesbaren Codes dargestellte Information.

Detektionsmechanismus und Interpretationssoftware können auf die Anforderungen des in die Laufstreifenoberfläche integrierten optoelektronisch lesbaren Codes abgestimmt sein.

Unter "Licht" ist elektromagnetische Strahlung zu verstehen, die sich zur Detektion durch ein optoelektronisches Lesegerät eignet. Insbesondere ist hierbei elektromagnetische Strahlung mit einer Wellenlänge von 380 nm bis 780 nm zu verstehen. Das auf das Relief einfallende Licht kann vom optoelektronischen Lesegerät ausgesandtes Licht oder Umgebungslicht wie direktes oder diffuses Sonnenlicht oder eine direkte oder diffuse künstliche Beleuchtung durch ein Leuchtmittel wie eine Raumbeleuchtung oder eine Laterne sein. Im Zuge der Erfindung wird von einer ausreichenden Lichtquelle ausgegangen.

In einer bevorzugten Ausführungsform ist das Relief aus dem gleichen Material wie der das Relief umgebende Laufstreifen gebildet. Die Verwendung eines zum Laufstreifenmaterial unterschiedlichen Materials ist somit nicht nötig. Das Material ist somit auf die Beanspruchung bei der Herstellung und/oder Benutzung des Laufstreifens abgestimmt. Hierdurch ist eine einfache Herstellung und eine lange Haltbarkeit des Codes ermöglicht.

Für die Art des Codes eignet sich jeder Code, der durch die Anordnung von zumindest einer Vielzahl an ersten Oberflächenbereichen und einer Vielzahl an zweiten Oberflächenbereichen in einer Fläche darstellen lässt. Ein solcher Code eignet sich hervorragend für die Darstellung binär codierter Information. Die Grundflächen der ersten Oberflächenbereiche und/oder die Grundflächen der zweiten Oberflächenbereiche können in Form eines Kreises, einer Kreisscheibe, einem Rechteck oder einem Quadrat ausgebildet sein.

In einer vorteilhaften Ausführungsform ist der optoelektronisch lesbare Code ein zweidimensionaler Code, bevorzugt ein quick-resoponse (QR-) Code. Bei den zweidimensionalen Codes sind auch gestapelte Codes wie der Codablock, Code 49 und PDF417, sowie Matrix Codes wie QR-Codes, der DataMatrix Code, MaxiCode und Aztec-Code, sowie Punktcodes zu nennen. QR-Codes umfassen auch Weiterentwicklungen wie den Design-QR-Code, Micro-QR-Code, Secure-QR-Code und iQR-Code.

In einer anderen vorteilhaften Ausführungsform ist der optoelektronisch lesbare Code ein eindimensionaler Code, bevorzugt ein Strichcode.

Der optoelektronisch lesbare Code ermöglicht es, gesetzliche Produktinformationen und/oder optionale Information, insbesondere eine Internetadresse, mittels des in die Oberfläche des Laufstreifens integrierten Codes darzustellen. Hierdurch ist eine kompakte Darstellung dieser Information geschaffen, die mittels eines optoelektronischen Lesegerätes gelesen werden kann. Die Internetadresse kann auf eine Internetseite verweisen, die weiterführende Information enthält, insbesondere Information über das Produkt und/oder den Hersteller und/oder eine Montage- und/oder Gebrauchsanleitung.

In einer bevorzugten Ausführungsform weist eine Lauffläche des Laufstreifens, bevorzugt eine Lauffläche eines Profilblocks des Laufstreifens, das Relief auf. Das Relief kann dabei ganz oder teilweise im Bereich der Lauffläche angeordnet sein. Ein solcher optoelektronisch lesbarer Code weist somit eine gute optoelektronische Lesbarkeit auf, da keine oder nur eine geringe Verschattung des Reliefs durch weitere Reifenbauteile die Lesbarkeit des optoelektronisch lesbaren Codes beeinträchtigen. Dies ermöglicht z.B. bei der Lagerung oder beim Händler im Verkauf ein besonders schnelles und einfaches Lesen des optoelektronisch lesbaren Codes.

Weist der Laufstreifen eine Einteilung in Profilblöcke auf, so ist es vorteilhaft, wenn das Relief ganz oder teilweise auf der Lauffläche eines Profilblocks angeordnet ist. Ein "Profilblock" kann durch eine oder zwei Umfangsrillen und/oder durch eine oder mehrere Querrillen begrenzt sein. Der Laufstreifen kann aber auch keine Profilrillen oder Profilblöcke aufweisen.

Zweckmäßig ist es, wenn der Bereich der Oberfläche, auf der das Relief angeordnet ist, zusammenhängend ausgebildet ist. Ist das ganz oder teilweise auf der Lauffläche angeordnete Relief durch eine Profilrille und/oder einen Feineinschnitt unterbrochen, so ist es zweckmäßig, wenn der Code eine ausreichende Redundanz zur Fehlerkorrektur aufweist.

Zweckmäßig ist es, wenn es sich bei dem Reifen um einen Neureifen handelt. Bei einem Neureifen bzw. einem noch nicht oder kaum abgefahrenen Laufstreifen ist ein auf der Lauffläche angeordneter optoelektronisch lesbare Code besonders gut lesbar.

Vorteilhaft ist es, wenn das Relief ganz oder teilweise axial innerhalb der Gürtelkanten angeordnet ist.

Vorteilhaft ist es aber auch, wenn das Relief ganz oder teilweise axial außerhalb der Gürtelkanten angeordnet ist. In diesem Bereich ist der Abrieb im Fahrbetrieb besonders gering, so dass die Lesbarkeit des optoelektronisch lesbaren Codes über eine besonders lange Nutzungsdauer ermöglicht ist.

Für einen besonders lange Haltbarkeit auch bei Abnutzung des Laufstreifens ist es vorteilhaft, wenn der Laufstreifen einen im Vergleich zur Lauffläche abgesenkten Oberflächenbereich, bevorzugt einen Oberflächenbereich einer Profilrille, aufweist und wenn das Relief ganz oder teilweise innerhalb des abgesenkten Oberflächenbereichs angeordnet ist.

Weist der Laufstreifen eine Profilrille mit einem Rillengrund auf, so kann eine Anordnung des Reliefs im Rillengrund vorteilhaft sein. Weist der Laufstreifen eine Profilrille mit einer Rillenflanke auf, so kann auch eine Anordnung des Reliefs im Bereich der Rillenflanke vorteilhaft sein. Je nach Lichteinfallswinkel kann so die Verschattung des Reliefs verringert sein und somit eine gute optoelektronische Lesbarkeit gewährleistet sein.

Besonders gute Ergebnisse lassen sich erzielen, wenn die Profilrille eine Breite von mindestens 8 mm aufweist.

In einer bevorzugten Ausführungsform nimmt der optoelektronisch lesbare Code eine Grundfläche von 0,8 cm² bis 16 cm² auf der Oberfläche des Laufstreifens ein. Hierdurch kann bei guter optoelektronischer Lesbarkeit eine große Menge an Information codiert werden.

Ein gute Auflösbarkeit der ersten Oberflächenbereiche und der zweiten Oberflächenbereiche durch ein optoelektronisches Lesegerät ist gegeben, wenn die ersten Oberflächenbereiche und/oder die zweiten Oberflächenbereiche jeweils eine Grundfläche von 0, 1 mm² bis 2,25 mm² auf der Oberfläche des Laufstreifens aufweisen.

Zweckmäßig ist es, wenn die Grundflächen der ersten Oberflächenbereiche und/oder der zweiten Oberflächenbereiche in Form und Fläche gleich ausgebildet sein.

Als vorteilhaft für eine gute optoelektronische Lesbarkeit hat es sich herausgestellt, wenn sich die ersten Oberflächenbereiche und die zweiten Oberflächenbereiche zumindest in ihrer mittleren Tiefe voneinander unterscheiden. Hierbei wird das arithmetische Mittel zur Ermittlung der mittleren Tiefe herangezogen. Durch eine solche relative Absenkung ist z.B. durch die damit einhergehende erhöhte Verschattung ein Intensitätsunterschied im reflektierten Licht erreichbar. Hierdurch können die ersten Oberflächenbereiche besonders gut von den zweiten Oberflächenbereichen mittels eines optoelektronischen Lesegeräts unterschieden werden.

In einer vorteilhaften Ausführungsform weisen die ersten Oberflächenbereiche jeweils ein oder mehrere Elemente auf. Die zweiten Oberflächenbereiche weisen erfindungsgemäß jeweils mehrere Elemente auf. Ein Element ist dabei jeweils eine Erhebung oder eine Vertiefung. Hierdurch können die Reflexionseigenschaften der jeweiligen Oberflächenbereiche gezielt beeinflusst werden.

Zweckmäßig ist es weiter, wenn die Elemente eines Oberflächenbereichs in Form einer Struktur oder einer Textur angeordnet sind. Der Begriff "Struktur" umfasst die regelmäßige Anordnung von Elementen wie eine regelmäßige Schraffur, d.h. gerade und parallel zueinander angeordnete Stege, wie regelmäßige Raster aus Elementen oder wie Gitterstrukturen aus sich kreuzenden Stegen. Der Begriff "Textur" umfasst eine unregelmäßige aber weitgehend homogen erscheinende Verteilung von Elementen, insbesondere eine Verteilung von Höhe und/oder Anordnung der Elemente gemäß einer statistischen Verteilung oder einem Rauschen.

Zweckmäßig zur gezielten Beeinflussung der Reflexionseigenschaften der Oberflächenbereiche erweisen sich Elemente, deren Form ein Steg und/oder ein Zylinder und/oder eine Pyramide und/oder ein Kegel und/oder ein Pyramidenstumpf und/oder ein Kegelstumpf zugrunde liegt. Beispielsweise werden durch die Ausrichtung der Längserstreckung von Stegen die Vorzugsrichtung der Reflexion gezielt beeinflusst. Zylinderförmige, pyramidenförmige oder kegelförmige Elemente eignen sich hervorragend zur Erhöhung des Absorptionsgrades durch mehrmalige Reflektion des Lichtes.

Es ist vorteilhaft, wenn die Elementspitzen zweier benachbarter Elemente eines Oberflächenbereichs einen Abstand von 0,01 mm bis 0,8 mm, besonders bevorzugt einen Abstand von 0,06 mm bis 0,3 mm, aufweisen. Ein solcher Abstand eignet sich hervorragend zur Manipulation der Reflexionseigenschaften von Licht, ohne dass das einzelne Element für einen Betrachter auf der Produktoberfläche heraussticht.

Entsprechende Vorteile ergeben sich, wenn ein Element eine Höhendifferenz von 0,08 mm bis 0,5 mm, besonders bevorzugt eine Höhendifferenz von 0,15 mm bis 0,3 mm, aufweist. Bevorzugt weisen alle Elemente eines Oberflächenbereichs eine solche Höhendifferenz auf. Die Höhendifferenz eines Elementes bemisst sich als Differenz der Höhe zwischen Elementgrund und Elementspitze.

Zweckmäßig ist es, wenn die Relieftiefe 0,08 mm bis 0,5 mm, bevorzugt 0,15 mm bis 0,3 mm, beträgt. Bei einer noch geringeren Relieftiefe als 0,08 mm ist die optoelektronische Lesbarkeit stark eingeschränkt.

Zweckmäßig ist es, wenn die ersten Oberflächenbereiche oder die zweiten Oberflächembereiche in ihrem Tiefenprofil dem Tiefenprofil einer zum Relief verschiedenen Oberfläche des Laufstreifens entsprechen. Eine zusätzliche Bearbeitung bzw. Verformung der Oberfläche und/oder eines Werkzeuges zur Bearbeitung bzw. Verformung der Oberfläche ist somit für die jeweiligen Oberflächenbereiche nicht nötig.

Durch die Kombination solcher ersten Oberflächenbereiche mit zweiten Oberflächenbereichen aufweisend jeweils zumindest ein Element ist ein besonders gut optoelektronisch lesbarer Code zur Verfügung gestellt.

Zweckmäßig ist es, wenn die Grundfläche des Reliefs relativ zur umgebenden Laufstreifenoberfläche erhöht ist. Dies ermöglicht eine bessere Ausleuchtung des Reliefs, wodurch eine bessere elektrooptische Lesbarkeit erreichbar ist.

Zweckmäßig kann es aber auch sein, wenn die Grundfläche des Reliefs relativ zur umgebenden Laufstreifenoberfläche abgesenkt ist. Hierdurch ist ein Schutz des Reliefs z.B. gegenüber Abrieb erreichbar.

Die Erfindung eignet sich sowohl für einteilige Laufstreifen als auch für mehrteilige Laufstreifen.

Die Erfindung ist sowohl für Vollreifen für Fahrzeuge als auch für Fahrzeugluftreifen vorteilhaft. Bevorzugt handelt es sich bei dem Reifen um einen Fahrzeugluftreifen. Hierbei ergeben sich besonders große Vorteile in der Haltbarkeit durch die Anordnung des optoelektronisch lesbaren Codes auf dem Laufstreifen. Besonders bevorzugt handelt es sich um einen Fahrzeugluftreifen für einen Personenkraftwagen.

Die Erfindung umfasst auch ein erstes Verfahren sowie ein zweites Verfahren zur Herstellung eines erfindungsgemäßen Fahrzeugreifens aufweisend ein Relief mit einer Relieftiefe von maximal 0,5 mm darstellend einen optoelektronisch lesbaren Code auf seinem Laufstreifen gemäß einer oder mehrerer der angeführten Ausführungsformen.

Das erste Herstellungsverfahren umfasst zumindest die folgenden Schritte:
a) Bereitstellen eines Reifenrohlings;
b) Bereitstellen eines Formwerkzeugs zur Formgebung des Laufstreifens, wobei das Formwerkzeug eine Formfläche aufweist, welche als Negativform des Reliefs ausgebildet ist;
c) Formgebung des Laufstreifens durch das Formwerkzeug, wobei das Relief mittels der Negativform formgebend in die Laufstreifenoberfläche geprägt wird;
d) Vulkanisation des Reifens.

Der Fahrzeugreifen wird also in ein Formwerkzeug eingesetzt und das Relief wird bei der Herstellung des Fahrzeugreifens durch eine entsprechend ausgestaltete Formfläche des Formwerkzeuges formgebend in die Bauteiloberfläche geprägt. Die Haltbarkeit des Reifens ist nur geringfügig von der lokalen Variation der Materialstärke des Laufstreifens durch das Relief beeinflusst. Im Gegensatz zu einem Relief in der Oberfläche der Seitenwand eines Fahrzeugluftriefens ist die Haltbarkeit eines Reifens weitgehend robust gegenüber einer produktionsbedingten geringfügigen Variation der Relieftiefe oder der Tiefenprofilen der Oberflächenbereiche. Hierdurch ist die Produktion vereinfacht und der Ausschuss verringert.

Bei dem Formwerkzeug kann es sich um eine Walze handeln, die das Relief in eine noch nicht ausgehärtete Oberfläche einprägt. Bei dem Herstellungsverfahren kann es sich auch um ein formgebendes Verfahren handeln, bei dem das Rohmaterial oder das Vorprodukt in ein Formwerkzeug gegeben wird und eine durch dieses Formwerkzeug bestimmte Produktform annimmt. Als formgebende Verfahren sind Gussverfahren, Spritzgussverfahren oder Vulkanisationsverfahren mittels einer Vulkanisationsform zu nennen. Das Relief ist als Negativform in das Formwerkzeug eingebracht und wird im formgebenden Herstellungsschritt direkt in die Produktoberfläche eingeprägt. Es ist kein aufwändiger zusätzlicher Arbeitsschritt zur Aufbringung des Reliefs, etwa durch Aufbringung einer zusätzlichen Material- und/oder Farbschicht auf jedes einzelne Produkt nötig. Hierdurch kann ein auf seinem Laufstreifen einen durch ein Relief dargestellten optoelektronisch lesbaren Code aufweisender Fahrzeugreifen kostengünstiger und auf einfache Art und Weise hergestellt werden.

Es ist zweckmäßig, wenn das Formwerkzeug mit einer Aussparung versehen ist, in die ein der Aussparung komplementär ausgebildeter Wechselstempel auswechselbar anzuordnen ist, wobei der Wechselstempel eine Formfläche aufweist, durch welche das Relief auf die Laufstreifenoberfläche übertragbar ist. Durch den Austausch des Wechselstempels können auf einfache Art und Weise Reifen zur Verfügung gestellt werden, die sich in ihrem eingeprägten optoelektronisch lesbaren Code unterscheiden. Die Formfläche des Wechselstempels ist vorzugsweise aus Metall, wie z.B. Stahl, oder aus Kunststoff, wie z.B. Silikon, oder mit einem solchen Material beschichtet. Mit einem solchen Wechselstempel können sehr feine Strukturen in die Laufstreifenoberfläche eingeprägt werden.

Das zweite Herstellungsverfahren umfasst die folgenden Schritte:
a) Bereitstellen eines vulkanisierten Fahrzeugreifens;
b) Bereitstellen einer Vorrichtung zum Materialabtrag, bevorzugt zur Lasergravur, einer Reifenoberfläche;
c) Materialabtrag der Laufstreifenoberfläche zur Erzeugung des Reliefs mittels der Vorrichtung zum Materialabtrag.

Das Relief wird hierbei durch Materialabtrag, bevorzugt durch Materialabtrag mittels Gravur, besonders bevorzugt durch Materialabtrag mittels Lasergravur, von Material von der Laufstreifenoberfläche des vulkanisierten Fahrzeugreifens erzeugt. Hierdurch kann der optoelektronisch lesbare Code auf dem Laufstreifen auf einfache Art und Weise erzeugt werden. Mit wenig Aufwand kann dabei der Code individuell für jeden Reifen ausgestaltet werden.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen radialen Querschnitt durch einen erfindungsgemäßen Fahrzeugluftreifen;
Fig. 2 eine Draufsicht auf einen Laufstreifen;
Fig. 3 bis Fig. 5 jeweils einen Querschnitt durch einen Laufstreifen;
Fig. 6 eine Draufsicht auf einen Laufstreifen;
Fig. 7 einen Querschnitt durch eine Profilrille;
Fig. 8 einen Querschnitt durch eine Profilrille.

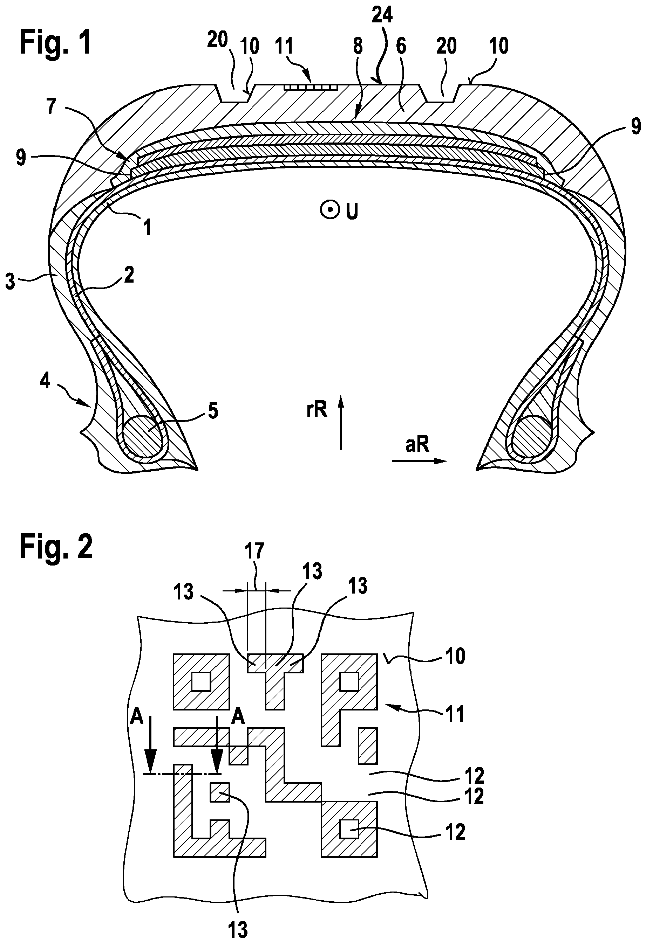

Die Figur 1 zeigt einen radialen Querschnitt durch einen Fahrzeugluftreifen für einen Personenkraftwagen. Die Erfindung ist aber auch auf andere Fahrzeugluftreifen oder auf Vollreifen anwendbar. Die wesentlichen Bauteile, aus welchen sich der dargestellte Fahrzeugluftreifen zusammensetzt, sind eine weitgehend luftundurchlässige Innenschicht 1, eine zumindest eine Festigkeitsträgerlage aufweisende Karkasse 2, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist. Weitere wesentliche Bauteile sind ein radial außerhalb der Karkasse 2 befindlicher profilierten Laufstreifen 6 und einen zwischen dem Laufstreifen 6 und der Karkasse 2 angeordneten, zwei Festigkeitsträgerlagen beinhaltenden Gürtel 7 mit zwei Gürtelkanten 9, welcher radial außen mit der Gürtelbandage 8 abgedeckt ist, welche parallel in Umfangsrichtung U des Fahrzeugluftreifens entlang der axialen Breite gewickelte Festigkeitsträger aufweist.

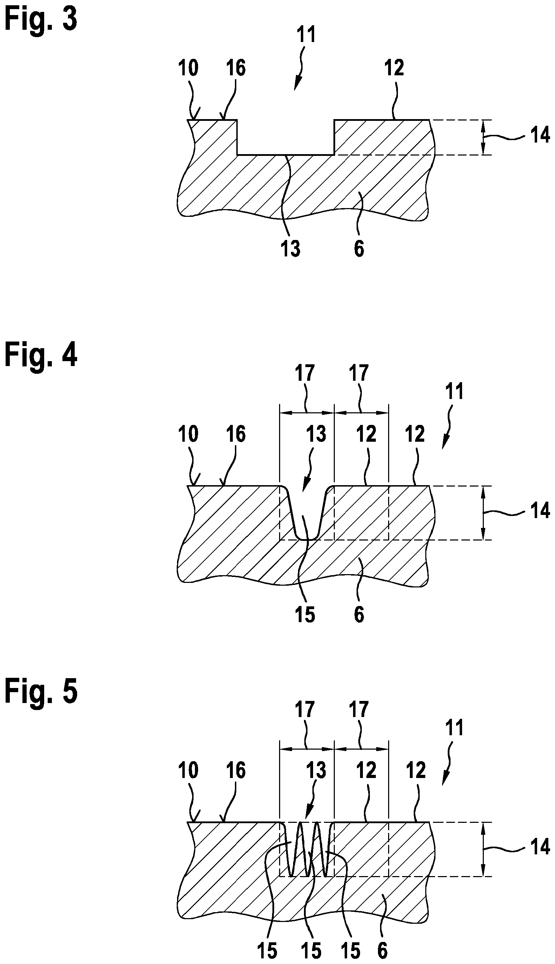

Der Fahrzeugreifen weist eine äußere Oberfläche 10 auf, welche einen optoelektronisch lesbaren Code aufweist, welcher durch ein Relief 11 gebildet ist. Der Übersichtlichkeit halber ist das Relief 11 nur schematisch dargestellt. Die äußere Oberfläche 10 aufweisend das Relief 11 ist dabei eine Oberfläche des Laufstreifens 6. Wie in der Figur 2 und der Figur 3 gezeigt, weist das Relief 11 eine Matrix-Anordnung einer Vielzahl an ersten Oberflächenbereichen 12 aufweisend ein Tiefenprofil und einer Vielzahl an zweiten Oberflächenbereichen 13 aufweisend ein Tiefenprofil auf, wobei sich die ersten Oberflächenbereiche 12 von den zweiten Oberflächenbereichen 13 in ihrem Tiefenprofil derart unterscheiden, dass sie optoelektronisch unterscheidbar ausgeführt sind. Weiter weist das Relief 11 eine Relieftiefe 14 von maximal 0,5 mm auf. Die Relieftiefe 14 kann 0,08 mm bis 0,5 mm, bevorzugt 0,15 mm bis 0,3 mm, betragen. Die Figur 1 zeigt deutlich, dass der Laufstreifen 6 anschließend an das Relief 11 massiv ausgeführt ist. Es kann sich um einen Neureifen handeln.

Das Relief 11 ist integraler Bestandteil der Laufstreifenoberfläche. Es kann aus dem gleichen Material wie der das Relief 11 umgebende Laufsteifen 6 gebildet sein.

Der durch das Relief 11 gebildete optoelektronisch lesbare Code kann ein zweidimensionaler Code, bevorzugt ein QR-Code, oder ein eindimensionaler Code, bevorzugt ein Strichcode, sein.

Ohne Beschränkung der Allgemeinheit ist in der Figur 1 der optoelektronisch lesbare Code ganz oder teilweise im Bereich einer Lauffläche 24 des Laufstreifens 6 angeordnet. Die Lauffläche 24 kommt beim Betrieb des Reifens ganz oder teilweise mit der Fahrbahn in Kontakt. Der optoelektronisch lesbare Code ist dabei axial innerhalb der Gürtelkanten 9 angeordnet. Der dargestellte Reifen weist Profilrillen 20 auf. Es kann sich um Umfangsrillen handeln. Der optoelektronisch lesbare Code kann auch ganz oder teilweise axial außerhalb der Gürtelkanten 9 angeordnet sein. Eine geeignete Position eines derart angeordneten optoelektronisch lesbaren Codes ist durch das Bezugszeichen 24 angezeigt.

Die Figur 2 zeigt eine Draufsicht auf die äußere Oberfläche 10 mitbildende Oberfläche des Laufstreifens 6 aufweisend den durch das Relief 11 gebildeten optoelektronisch lesbaren Code. Es kann sich dabei um den in der Figur 1 gezeigten Fahrzeugluftreifen handeln. Das Relief 11 ist eine Matrix-Anordnung einer Vielzahl an ersten Oberflächenbereichen 12 aufweisend ein Tiefenprofil und einer Vielzahl an zweiten Oberflächenbereichen 13 aufweisend ein Tiefenprofil. Verschiedene Beispiele für einen Schnitt durch den Laufstreifen 6 aufweisend das Relief 11 entlang der Linie A-A sind in der Figur 3 bis Figur 5 dargestellt. Die ersten Oberflächenbereiche 12 und die zweiten Oberflächenbereiche 13 gleichen sich in der Form und Fläche ihrer Grundfläche. Sie weisen eine quadratische Grundfläche mit Kantenlänge 17 von 0,33 mm bis 1,5 mm auf. Somit weisen sie eine Grundfläche von 0,1 mm² bis 2,25 mm² auf. Das Relief 11 weist üblicherweise eine Grundfläche von 0,8 cm² bis 16 cm² auf.

Die Figuren 3 bis 5 zeigen jeweils ein Beispiel für einen Querschnitt durch einen Laufstreifen 6 aufweisend das Relief 11. Die in den Figuren 3 und 4 dargestellten konkreten Ausführungsbeispiele sind nicht Teil der Erfindung, sondern erleichtern das Verständnis der Erfindung. Der Querschnitt kann entlang der in der Figur 2 dargestellten Linie A-A verlaufen. Das Relief 11 weist jeweils eine Relieftiefe 14 von maximal 0,5 mm auf. Die Relieftiefe 14 ist der maximale Höhenunterschied des Reliefs 11, gemessen senkrecht zur Grundfläche des Reliefs. Anschließend an das Relief 11 ist der Laufstreifen 6 massiv ausgeführt. Ohne Beschränkung der Allgemeinheit entspricht das Tiefenprofil des ersten Oberflächenbereichs 12 dem Tiefenprofil einer zum Relief verschiedenen Oberfläche 16 des Laufstreifens 6. Das Tiefenprofil des zweien Oberflächenbereichs 13 ist jeweils abgesenkt relativ zum Tiefenprofil des ersten Oberflächenbereichs 12. Es weist jeweils eine größere mittlere Tiefe auf als das Tiefenprofil des ersten Oberflächenbereichs 12. Zur Ermittlung der mittleren Tiefe wird das arithmetische Mittel herangezogen. Die ersten Oberflächenbereiche 12 unterscheiden sich von den zweiten Oberflächenbereichen 13 in ihrem Tiefenprofil jeweils derart, dass sie optoelektronisch unterscheidbar ausgeführt sind.

In der Figur 3 ist die gesamte Grundfläche des zweiten Oberflächenbereichs 13 im Vergleich zum ersten Oberflächenbereich 12 abgesenkt. In der Figur 4 weist der zweite Oberflächenbereich 13 genau ein Element 15 auf. Im gezeigten Fall ist das Element 15 eine Vertiefung. In der Figur 5 weist der zweite Oberflächenbereich 13 mehrere Elemente 15 auf. Die Elemente 15 sind Vertiefungen. Sie können eine pyramidenförmige Gestalt mit quadratischer Grundfläche oder eine kegelförmige Gestalt aufweisen oder parallel zueinander angeordnete Rillen sein. Die Elemente 15 können als Struktur angeordnet sein. Der Einfachheit halber ist nur eine geringe Anzahl an Elementen 15 dargestellt.

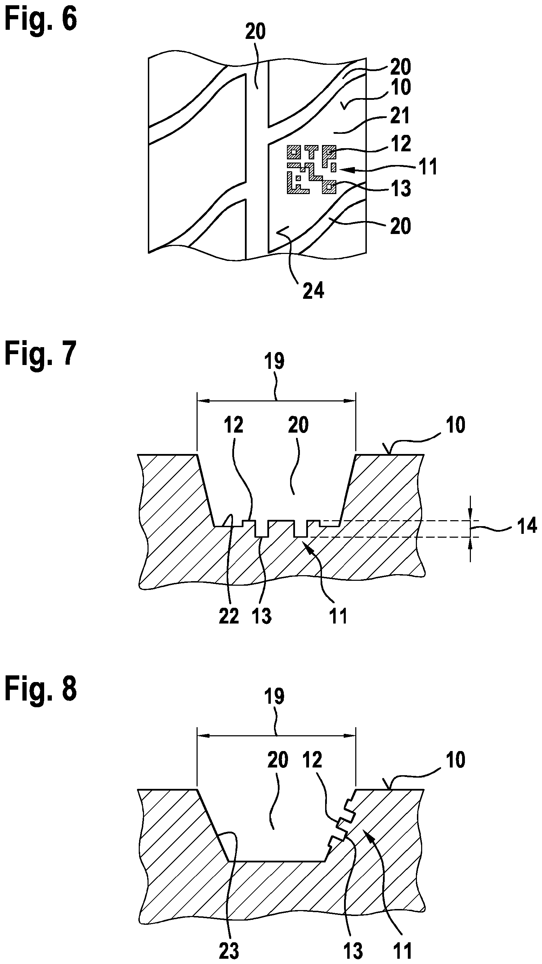

Die Figur 6 bis Figur 8 zeigt jeweils ein Beispiel für die Anordnung eines solchen durch ein Relief 11 gebildeten optoelektronisch lesbaren Codes an der Oberfläche des Laufstreifens 6. Die in den Figuren 7 und 8 dargestellten konkreten Ausführungsbeispiele sind nicht Teil der Erfindung, sondern erleichtern das Verständnis der Erfindung. Der Laufsteifen 6 kann der Laufsteifen eines Fahrzeugluftreifens gemäß Figur 1 sein. Die ersten Oberflächenbereiche 12 und die zweiten Oberflächenbereiche 13 können auch anders, z.B. wie in einer der Figuren 3 bis 4, ausgestaltet sein.

Die Figur 6 zeigt eine Draufsicht auf einen Laufstreifen 6 aufweisend Profilrillen 20. Die Profilrillen 20 begrenzen einen Profilblock 21. Das Relief 11 ist ganz oder teilweise auf der Lauffläche 24 des Profilblocks 21 angeordnet. Das Relief 11 kann relativ zur umgebenden Laufstreifenoberfläche abgesenkt sein.

Die Figur 7 zeigt einen Querschnitt durch einen Laufstreifen 6 aufweisend eine Profilrille 20 als abgesenkten Oberflächenbereich mit einem Rillengrund 22. Das Relief 11 ist ganz oder teilweise im Bereich des Rillengrunds 22 angeordnet. Die Grundfläche des Reliefs 11 ist relativ zur umgebenden Oberfläche des Rillengrunds 22 um weniger als die Relieftiefe 14 erhöht. Die Breite 19 der Rille kann mindestens 8 mm betragen. Der Einfachheit halber sind nur wenige Oberflächenbereiche 12, 13 dargestellt.

Die Figur 8 zeigt einen Querschnitt durch einen Laufstreifen 6 aufweisend eine Profilrille 20 als abgesenkten Oberflächenbereich mit einer Rillenflanke 23. Das Relief 11 ist ganz oder teilweise im Bereich der Rillenflanke 23 angeordnet. Die Breite 19 der Rille kann mindestens 8 mm betragen. Der Einfachheit halber sind nur wenige Oberflächenbereiche 12, 13 dargestellt.

Die in den Figuren 1 bis 8 dargestellten erfindungsgemäßen Fahrzeugluftreifen bzw. Laufstreifen aufweisend einen optoelektronisch lesbaren und als Relief 11 ausgebildeten Code auf dem Laufstreifen können gemäß dem ersten Herstellungsverfahren formgebend oder gemäß dem zweiten Herstellungsverfahren durch Materialabtrag hergestellt sein.

### Bezugszeichenliste

### (Teil der Beschreibung)

- 1: Innenschicht
- 2: Karkasse
- 3: Seitenwand
- 4: Wulstbereich
- 5: Wulstkern
- 6: Laufstreifen
- 7: Gürtel
- 8: Gürtelbandage
- 9: Gürtelkante
- 10: äußere Oberfläche
- 11: Relief
- 12: erster Oberflächenbereich
- 13: zweiter Oberflächenbereich
- 14: Relieftiefe
- 15: Element
- 16: verschiedene Oberfläche
- 17: Abmessung
- 18: Schulterbereich
- 19: Breite
- 20: Profilrille
- 21: Profilblock
- 22: Rillengrund
- 23: Rillenflanke
- 24: Lauffläche

## Patentansprüche

1. Fahrzeugreifen aufweisend eine äußere Oberfläche (10), wobei die äußere Oberfläche (10) einen optoelektronisch lesbaren Code aufweist, welcher durch ein Relief (11) aus einer Matrix-Anordnung einer Vielzahl an ersten Oberflächenbereichen (12) aufweisend ein Tiefenprofil und einer Vielzahl an zweiten Oberflächenbereichen (13) aufweisend ein Tiefenprofil gebildet ist, wobei sich die ersten Oberflächenbereiche (12) von den zweiten Oberflächenbereichen (13) in ihrem Tiefenprofil derart unterscheiden, dass sie optoelektronisch unterscheidbar ausgeführt sind, und wobei das Relief (11) eine Relieftiefe (14) von maximal 0,5 mm aufweist, und wobei die äußere Oberfläche (10) aufweisend den optoelektronisch lesbaren Code eine Oberfläche eines Laufstreifens (6) des Fahrzeugreifens ist
**dadurch gekennzeichnet, dass**
die ersten Oberflächenbereiche (12) in ihrem Tiefenprofil dem Tiefenprofil einer zum Relief (11) verschiedenen Oberfläche (16) des Laufstreifens (6) entsprechen und
dass die zweiten Oberflächenbereiche (13) jeweils mehrere Elemente (15) aufweisen, wobei ein Element (15) dabei jeweils eine Erhebung oder eine Vertiefung ist.

2. Fahrzeugreifen nach Anspruch 1, **dadurch gekennzeichnet, dass** das Relief (11) aus dem gleichen Material wie der das Relief umgebende Laufstreifen (6) gebildet ist.

3. Fahrzeugreifen nach einem oder mehreren der vorhergehenden Ansprüche, **dadurch gekennzeichnet, dass** der optoelektronisch lesbare Code ein zweidimensionaler Code, bevorzugt ein QR-Code, oder ein eindimensionaler Code, bevorzugt ein Strichcode, ist.

4. Fahrzeugreifen nach einem oder mehreren der vorhergehenden Ansprüche, **dadurch gekennzeichnet, dass** eine Lauffläche (24) des Laufstreifens (6),
bevorzugt eine Lauffläche eines Profilblocks (21) des Laufstreifens (6), das Relief (11) aufweist.

5. Fahrzeugreifen nach einem oder mehreren der vorhergehenden Ansprüche, **dadurch gekennzeichnet, dass** das Relief (11) ganz oder teilweise axial innerhalb der Gürtelkanten (9) angeordnet ist.

6. Fahrzeugreifen nach einem oder mehreren der vorhergehenden Ansprüche, **dadurch gekennzeichnet, dass** das Relief (11) ganz oder teilweise axial außerhalb der Gürtelkanten (9) angeordnet ist.

7. Fahrzeugreifen nach einem oder mehreren der vorhergehenden Ansprüche, **dadurch gekennzeichnet, dass** der Laufstreifen (6) einen im Vergleich zur Lauffläche (24) abgesenkten Oberflächenbereich (22, 23), bevorzugt einen Oberflächenbereich (22, 23) einer Profilrille (20), aufweist und dass der abgesenkte Oberflächenbereich (22, 23) das Relief (11) ganz oder teilweise aufweist.

8. Fahrzeugreifen nach einem oder mehreren der vorhergehenden Ansprüche, **dadurch gekennzeichnet, dass** der optoelektronisch lesbare Code eine Grundfläche von 0,8 cm² bis 16 cm² auf der Oberfläche des Laufstreifens (6) einnimmt.

9. Fahrzeugreifen nach einem oder mehreren der vorhergehenden Ansprüche, **dadurch gekennzeichnet, dass** die ersten Oberflächenbereiche (12) und/oder die zweiten Oberflächenbereiche (13) eine Grundfläche von 0,1 mm² bis 2,25 mm² auf der Oberfläche des Laufstreifens (6) einnehmen.

10. Fahrzeugreifen nach einem oder mehreren der vorhergehenden Ansprüche, **dadurch gekennzeichnet, dass** sich die ersten Oberflächenbereiche (12) und die zweiten Oberflächenbereiche (13) zumindest in ihrer mittleren Tiefe voneinander unterscheiden.

11. Verfahren zur Herstellung eines Fahrzeugreifens aufweisend eine äußere Oberfläche (10), wobei die äußere Oberfläche (10) einen optoelektronisch lesbaren Code aufweist, welcher durch ein Relief (11) aus einer Matrix-Anordnung einer Vielzahl an ersten Oberflächenbereichen (12) aufweisend ein Tiefenprofil und einer Vielzahl an zweiten Oberflächenbereichen (13) aufweisend ein Tiefenprofil gebildet ist, wobei sich die ersten Oberflächenbereiche (12) von den zweiten Oberflächenbereichen (13) in ihrem Tiefenprofil derart unterscheiden, dass sie optoelektronisch unterscheidbar ausgeführt sind, wobei das Relief (11) eine Relieftiefe (14) von maximal 0,5 mm aufweist, wobei die ersten Oberflächenbereiche (12) in ihrem Tiefenprofil dem Tiefenprofil einer zum Relief (11) verschiedenen Oberfläche (16) des Laufstreifens (6) entsprechen, wobei die zweiten Oberflächenbereiche (13) jeweils mehrere Elemente (15) aufweisen, wobei ein Element (15) dabei jeweils eine Erhebung oder eine Vertiefung ist, und wobei das Verfahren zumindest die folgenden Schritte aufweist:
a) Bereitstellen eines Reifenrohlings;
b) Bereitstellen eines Formwerkzeugs zur Formgebung des Laufstreifens (6), wobei das Formwerkzeug eine Formfläche aufweist, welche als Negativform des Reliefs (11) ausgebildet ist;
c) Formgebung des Laufstreifens durch das Formwerkzeug, wobei das Relief (11) mittels der Negativform formgebend in die Laufstreifenoberfläche geprägt wird;
d) Vulkanisation des Reifens.

12. Verfahren zur Herstellung eines Fahrzeugreifens aufweisend eine äußere Oberfläche (10), wobei die äußere Oberfläche (10) einen optoelektronisch lesbaren Code aufweist, welcher durch ein Relief (11) aus einer Matrix-Anordnung einer Vielzahl an ersten Oberflächenbereichen (12) aufweisend ein Tiefenprofil und einer Vielzahl an zweiten Oberflächenbereichen (13) aufweisend ein Tiefenprofil gebildet ist, wobei sich die ersten Oberflächenbereiche (12) von den zweiten Oberflächenbereichen (13) in ihrem Tiefenprofil derart unterscheiden, dass sie optoelektronisch unterscheidbar ausgeführt sind, und wobei das Relief (11) eine Relieftiefe von maximal 0,5 mm aufweist, wobei die ersten Oberflächenbereiche (12) in ihrem Tiefenprofil dem Tiefenprofil einer zum Relief (11) verschiedenen Oberfläche (16) des Laufstreifens (6) entsprechen, wobei die zweiten Oberflächenbereiche (13) jeweils mehrere Elemente (15) aufweisen, wobei ein Element (15) dabei jeweils eine Erhebung oder eine Vertiefung ist, und wobei das Verfahren zumindest die folgenden Schritte aufweist:
a) Bereitstellen eines vulkanisierten Fahrzeugreifens;
b) Bereitstellen einer Vorrichtung zum Materialabtrag, bevorzugt zur Lasergravur, einer Reifenoberfläche (10);
c) Materialabtrag der Laufstreifenoberfläche zur Erzeugung des Reliefs (11) mittels der Vorrichtung zum Materialabtrag.

## Claims

1. Vehicle tyre having an outer surface (10), wherein the outer surface (10) has an optoelectronically readable code, which is formed by a relief (11) comprising a matrix arrangement of a multiplicity of first surface regions (12) having a depth profile and a multiplicity of second surface regions (13) having a depth profile, wherein the first surface regions (12) differ from the second surface regions (13) in their depth profile in such a way that they are configured as optoelectronically distinguishable, and wherein the relief (11) has a relief depth (14) of a maximum of 0.5 mm, and wherein the outer surface (10) having the optoelectronically readable code is a surface of a tread (6) of the vehicle tyre,
**characterized in that**
the first surface regions (12) correspond in their depth profile to the depth profile of the surface (16) of the tread (6) that is different from the relief (11) and
**in that** the second surface regions (13) respectively have multiple elements (15), wherein in each case an element (15) is an elevation or a depression.

2. Vehicle tyre according to Claim 1, **characterized in that** the relief (11) is formed from the same material as the tread (6) surrounding the relief.

3. Vehicle tyre according to one or more of the preceding claims, **characterized in that** the optoelectronically readable code is a two-dimensional code, preferably a QR code, or a one-dimensional code, preferably a barcode.

4. Vehicle tyre according to one or more of the preceding claims, **characterized in that** a running surface (24) of the tread (6),
preferably a running surface of a profile block (21) of the tread (6), has the relief (11).

5. Vehicle tyre according to one or more of the preceding claims, **characterized in that** the relief (11) is arranged entirely or partially axially inside the belt edges (9).

6. Vehicle tyre according to one or more of the preceding claims, **characterized in that** the relief (11) is arranged entirely or partially axially outside the belt edges (9).

7. Vehicle tyre according to one or more of the preceding claims, **characterized in that** the tread (6) has a surface region (22, 23) that is lowered in comparison with the tread (24), preferably a surface region (22, 23) of a profile groove (20), and **in that** the lowered surface region (22, 23) entirely or partially has the relief (11).

8. Vehicle tyre according to one or more of the preceding claims, **characterized in that** the optoelectronically readable code takes up a base area of 0.8 cm² to 16 cm² on the surface of the tread (6).

9. Vehicle tyre according to one or more of the preceding claims, **characterized in that** the first surface regions (12) and/or the second surface regions (13) take up a base area of 0.1 mm² to 2.25 mm² on the surface of the tread (6).

10. Vehicle tyre according to one or more of the preceding claims, **characterized in that** the first surface regions (12) and the second surface regions (13) differ from one another at least in their average depth.

11. Method for producing a vehicle tyre having an outer surface (10), wherein the outer surface (10) has an optoelectronically readable code, which is formed by a relief (11) comprising a matrix arrangement of a multiplicity of first surface regions (12) having a depth profile and a multiplicity of second surface regions (13) having a depth profile, wherein the first surface regions (12) differ from the second surface regions (13) in their depth profile in such a way that they are configured as optoelectronically distinguishable, wherein the relief (11) has a relief depth (14) of a maximum of 0.5 mm, wherein the first surface regions (12) correspond in their depth profile to the depth profile of a surface (16) of the tread (6) that is different from the relief (11), wherein the second surface regions (13) respectively have multiple elements (15), wherein in each case an element (15) is an elevation or a depression, and wherein the method comprises at least the following steps:
a) providing a green tyre;
b) providing a mould for moulding the tread (6), wherein the mould has a moulding surface which is formed as a negative form of the relief (11);
c) moulding the tread by the mould, wherein the relief (11) is stamped into the tread surface in a moulding manner by means of the negative form;
d) vulcanizing the tyre.

12. Method for producing a vehicle tyre having an outer surface (10), wherein the outer surface (10) has an optoelectronically readable code, which is formed by a relief (11) comprising a matrix arrangement of a multiplicity of first surface regions (12) having a depth profile and a multiplicity of second surface regions (13) having a depth profile, wherein the first surface regions (12) differ from the second surface regions (13) in their depth profile in such a way that they are configured as optoelectronically distinguishable, and wherein the relief (11) has a relief depth of a maximum of 0.5 mm, wherein the first surface regions (12) correspond in their depth profile to the depth profile of a surface (16) of the tread (6) that is different from the relief (11), wherein the second surface regions (13) respectively have multiple elements (15), wherein in each case an element (15) is an elevation or a depression, and wherein the method comprises at least the following steps:
a) providing a vulcanized vehicle tyre;
b) providing a device for removing material, preferably for laser engraving, on a tyre surface (10);
c) removing material on the tread surface for creating the relief (11) by means of the device for removing material.

## Revendications

1. Pneumatique de véhicule comportant une surface extérieure (10), la surface extérieure (10) comportant un code qui est lisible par des moyens optoélectroniques et qui est formé par un relief (11) comprenant un ensemble matriciel d'un grand nombre de premières zones de surface (12) qui présentent un dessin en profondeur et d'un grand nombre de deuxièmes zones de surface (13) qui présentent un dessin en profondeur, les premières zones de surface (12) différant des deuxièmes zones de surface (13) en termes de dessin en profondeur de manière à ce qu'elles soient réalisées de façon à être distinguables par des moyens optoélectroniques, et le relief (11) ayant une profondeur de relief (14) de 0,5 mm maximum, et la surface extérieure (10) qui comporte le code lisible par des moyens optoélectroniques étant une surface d'une bande de roulement (6) du pneumatique de véhicule,
**caractérisé en ce que**
le dessin en profondeur des premières zones de surface (12) correspond au dessin en profondeur d'une surface (16) de la bande de roulement (6) qui est différente du relief (11) et
les deuxièmes zones surfaces (13) comportent chacune une pluralité d'éléments (15), un élément (15) étant une élévation ou une dépression.

2. Pneumatique de véhicule selon la revendication 1, **caractérisé en ce que** le relief (11) est en la même matière que la bande de roulement (6) qui entoure le relief.

3. Pneumatique de véhicule selon une ou plusieurs des revendications précédentes, **caractérisé en ce que** le code lisible par des moyens optoélectroniques est un code bidimensionnel, de préférence un code QR, ou un code unidimensionnel, de préférence un code à barres.

4. Pneumatique de véhicule selon une ou plusieurs des revendications précédentes, **caractérisé en ce qu'**une surface de roulement (24) de la bande de roulement (6), de préférence une surface de roulement d'une sculpture (21) de la bande de roulement (6), comporte le relief (11).

5. Pneumatique de véhicule selon une ou plusieurs des revendications précédentes, **caractérisé en ce que** le relief (11) est disposé de manière entièrement ou partiellement axiale à l'intérieur des bords de ceinture (9).

6. Pneumatique de véhicule selon une ou plusieurs des revendications précédentes, **caractérisé en ce que** le relief (11) est disposé de manière entièrement ou partiellement axiale à l'extérieur des bords de ceinture (9).

7. Pneumatique de véhicule selon une ou plusieurs des revendications précédentes, **caractérisé en ce que** la bande de roulement (6) comporte une surface (22, 23) qui est abaissée par rapport à la surface de roulement (24), de préférence une zone de surface (22, 23) d'une rainure profilée (20), et **en ce que** la zone de surface abaissée (22, 23) comporte entièrement ou partiellement le relief (11).

8. Pneumatique de véhicule selon une ou plusieurs des revendications précédentes, **caractérisé en ce que** le code lisible par des moyens optoélectroniques occupe une aire de 0,8 cm² à 16 cm² sur la surface de la bande de roulement (6).

9. Pneumatique de véhicule selon une ou plusieurs des revendications précédentes, **caractérisé en ce que** les premières surfaces (12) et/ou les deuxièmes surfaces (13) occupent une aire de 0,1 mm² à 2,25 mm2 sur la surface de la bande de roulement (6).

10. Pneumatique de véhicule selon une ou plusieurs des revendications précédentes, **caractérisé en ce que** les premières zones de surface (12) et les deuxièmes zones de surface (13) se différencient au moins par leur profondeur moyenne.

11. Procédé de fabrication d'un pneumatique de véhicule comportant une surface extérieure (10), la surface extérieure (10) comportant un code qui est lisible par des moyens optoélectroniques et qui est formé par un relief (11) comprenant un ensemble matriciel d'un grand nombre de premières zones de surface (12) qui comportent un dessin en profondeur et d'un grand nombre de deuxièmes zones de surface (13) qui comportent un dessin en profondeur, les premières zones de surface (12) différant des deuxièmes zones de surface (13) en termes de dessin en profondeur de manière à ce qu'elles soient réalisées de façon à être distinguables par des moyens optoélectroniques, le relief (11) ayant une profondeur de relief (14) de 0,5 mm maximum, le dessin en profondeur des premières zones de surface (12) correspondant au dessin en profondeur d'une surface (16) de la bande de roulement (6) qui est différente du relief (11), les deuxièmes zones de surface (13) comportant chacune une pluralité d'éléments (15), un élément (15) étant à chaque fois une élévation ou une dépression, et le procédé comportant au moins les étapes suivantes :
a) fournir une ébauche de pneumatique ;
b) fournir un outil de moulage destiné à mettre en forme la bande de roulement (6), l'outil de moulage comportant une surface de moulage qui est conçue comme un moule négatif du relief (11) ;
c) mettre en forme la bande de roulement par le biais de l'outil de moulage, le relief (11) étant mis en forme par matriçage dans la surface de la bande de roulement au moyen du moule négatif ;
d) vulcaniser le pneumatique.

12. Procédé de fabrication d'un pneumatique de véhicule comportant une surface extérieure (10), la surface extérieure (10) comportant un code qui est lisible par des moyens optoélectroniques et qui est formé par un relief (11) comprenant un ensemble matriciel d'un grand nombre de premières zones de surface (12) qui comportent un dessin en profondeur et d'un grand nombre de deuxièmes zones de surface (13) qui comportent un dessin en profondeur, les premières zones de surface (12) différant des deuxièmes zones de surface (13) en termes de dessin en profondeur de manière à ce qu'elles soient réalisées de façon à être distinguables par des moyens optoélectroniques, le relief (11) ayant une profondeur de relief de 0,5 mm maximum, le dessin en profondeur des premières zones de surface (12) correspondant au dessin en profondeur d'une surface (16) de la bande de roulement (6) qui est différente du relief (11), les deuxièmes zones de surface (13) comportant chacune une pluralité d'éléments (15), un élément (15) étant à chaque fois une élévation ou une dépression, et le procédé comportant au moins les étapes suivantes :
a) fournir un pneumatique de véhicule vulcanisé ;
b) fournir un dispositif d'enlèvement de matière, de préférence pour la gravure au laser, d'une surface de pneumatique (10) ;
c) enlever de la matière de la surface de la bande de roulement au moyen du dispositif d'enlèvement de matière afin de réaliser le relief (11).
